# FASCICULE DE BREVET EUROPEEN

(11) **EP 1 954 488 B1**
(45) Date de publication et mention de la délivrance du brevet: **01.10.2014**
(21) Numéro de dépôt: 06820257.1
(22) Date de dépôt: 05.10.2006
(51) Int. Cl.: B32B 17/10, B60J 1/20, B60J 7/043, B62D 25/06

(54) **VITRE FEUILLETEE PRESENTANT UN ELEMENT DE MAINTIEN INTEGRE**
VERBUNDSCHEIBE MIT INTEGRIERTEM HALTERUNGSELEMENT
LAMINATED GLASS WITH INTEGRATED SUPPORT ELEMENT

(30) Priorité: 05.10.2005 DE 102005047656
(43) Date de publication de la demande: 13.08.2008
(73) Titulaire: SAINT-GOBAIN GLASS FRANCE, 92400 Courbevoie (FR)
(72) Inventeur: MÄUSER, Helmut, 52134 Herzogenrath (DE); MERCKS, Horst, 52068 Aachen (DE)
(74) Mandataire: Colombier, Christian
(86) Numéro de dépôt international: PCT/FR2006/050994
(87) Numéro de publication internationale: WO 2007/042716

(56) Documents cités:
- EP-A1- 1 025 986
- WO-A-00/53410
- WO-A1-2004/073976
- DE-A1- 3 227 647
- DE-C1- 19 723 596
- FR-A1- 2 146 956
- FR-A1- 2 175 910
- US-A- 2 991 207

## Description

L'invention concerne une vitre feuilletée présentant les caractéristiques du préambule de la revendication 1.

Par vitre feuilletée, on entend ici des structures à plusieurs couches composées d'au moins une vitre rigide et d'une couche ou d'une feuille adhésive assemblée à celle-ci par collage superficiel. La vitre rigide en général transparente ou translucide peut être constituée de verre ou de matière synthétique. D'autres vitres rigides peuvent encore être assemblées à la vitre rigide au moyen de couches ou de feuilles adhésives, des vitres rigides en verre et en matière synthétique pouvant d'ailleurs être réunies dans une seule et même vitre feuilletée.

On connaît déjà beaucoup de formes de réalisation de telles vitres feuilletées. Elles ont comme objectif de base commun une haute sécurité de leur fixation dans l'ouverture de fenêtre respective. Ceci est valable non seulement pour des vitres de fenêtres normales dans des véhicules et des bâtiments, mais aussi pour des vitres renforcées pour des objectifs de protection spéciaux, qui sont utilisées de plus en plus fréquemment.

En règle générale, on prévoit des éléments de maintien, qui sont prévus sur le bord extérieur de la vitre rigide et qui restreignent aussi peu que possible le champ de vision libre de la vitre. Les éléments de maintien peuvent être des pièces discrètes, des bandes ou aussi des cadres périphériques, ce dernier cas permettant d'obtenir la plus grande sécurité et en outre un recouvrement continu d'une fente formée entre l'arête extérieure de la vitre feuilletée et le cadre.

Il existe aussi des formes de réalisation très différentes de vitres feuilletées avec des éléments de maintien intégrés, qui sont noyés dans le plan d'une couche adhésive entre deux vitres rigides et qui sortent au-delà du bord extérieur des vitres rigides.

Souvent, ces éléments de maintien sont réalisés sous forme de profilés continus ou de tronçons de profilé collés ou formés par extrusion ou projection sur la vitre feuilletée. Ils peuvent à leur tour contenir d'autres éléments de fixation pour la vitre.

Dans de nombreux cas d'application, des couches fonctionnelles ou des éléments fonctionnels à faible résistance mécanique (couches d'isolation thermique, couches lumineuses, cellules solaires) sont déposés sur les vitres de verre, et il faut les protéger contre le contact et contre les rayures. A cet effet, on peut par exemple déposer une feuille de protection également transparente avec des couches adhésives de masquage hautement transparentes sur les surfaces à protéger.

Dans d'autres cas d'application encore, la feuille (de protection) peut elle-même être un support de couches fonctionnelles, ou en tous cas former une partie d'un tel support éventuellement en plusieurs couches. A une telle couche de recouvrement ou de masquage, on ajoute encore la fonction de rétention des éclats, en plus de sa fonction optique, électrique et/ou d'isolation thermique. Des exemples de feuilles avec des couches fonctionnelles sont: éclairage (LED, OLED, électroluminescence, ...), des couches de modification de la transmission sur un substrat en feuille (électrochrome, thermochrone, photochrome, ...) ou des couches avec une transmission de lumière commutable (éléments à cristaux liquides - LCD, produits du type Priva-Lite^{®} (www.privalite.com), dispositifs à particules suspendues (SPD), ...) ainsi que des feuilles avec des couches réfléchissant le rayonnement infrarouge.

De telles feuilles de protection sont également connues sous la forme de feuilles dites de rétention d'éclats ou peuvent être utilisées comme telles. Elles sont appliquées en particulier dans des véhicules sur la surface d'une vitre de fenêtre, qui est tournée vers l'intérieur de l'habitacle. Le but de ces feuilles est d'empêcher la pénétration d'éclats dans l'habitacle, ainsi que le contact éventuel de personnes avec des arêtes vives résultant de la cassure, en cas de bris de la vitre.

Des feuilles de matière synthétique des types mentionnés ci-dessus sont en règle générale pourvues d'un revêtement antirayures (par exemple en polysiloxane), pour conférer à leur surface une haute qualité optique pendant une longue période.

Pour des véhicules, des vitres de toit par nature monolithiques sont notamment équipées de telles feuilles de protection, parce que des vitres feuilletées avec deux vitres rigides et une couche adhésive ne peuvent pas toujours être utilisées dans la région du toit. Quoi qu'il en soit, les vitres feuilletées conventionnelles sont plus épaisses, plus lourdes et aussi plus coûteuses à fabriquer.

Un exemple connu de feuilles de protection est le système stratifié de la firme DuPont disponible dans le commerce sous le nom commercial "Spallshield". Il se compose par exemple d'une feuille adhésive thermoplastique (polyvinylbutyral - PVB) d'une épaisseur de 0,76 mm et d'une feuille résistant aux rayures en PET (polyéthylène téréphtalate). La feuille adhésive est appliquée directement sur la surface de la vitre rigide et maintient ainsi la feuille de PET comme protection proprement dite contre les éclats par collage superficiel sur la face de la vitre.

Si une telle vitre doit être collée directement à une carrosserie ou être équipée d'un profilé en matière synthétique adhérent (joint d'étanchéité périphérique, profilé de montage), le revêtement antirayures précité peut cependant donner lieu à des problèmes d'adhérence.

Le document DE 103 55 896 A1 décrit une vitre feuilletée avec une feuille appliquée sur le verre et coupée en retrait du côté du bord dans laquelle, pour l'amélioration de l'adhérence d'une colle de montage sur la surface du verre, cette dernière n'est recouverte que partiellement avec la feuille dans la région du bord.

Le document DE 102 06 717 A1 décrit également une vitre feuilletée de ce type avec une feuille de protection, dans laquelle cette dernière est elle-même formée comme élément de maintien mécanique supplémentaire.

Le problème à la base de l'invention est de procurer une vitre feuilletée présentant une sécurité de montage accrue.

Conformément à l'invention, ce problème est résolu par les caractéristiques de la revendication 1. Les caractéristiques des revendications dépendantes présentent des formes de réalisation avantageuses de cette invention.

Avec un élément de maintien, qui est disposé en un assemblage intime en continuité de forme et de matière sous le bord de la feuille de protection et qui est posé librement à l'autre côté, on procure une fonction de fixation pour le cas de dommages. L'élément de maintien forme lui-même, lors d'une destruction de la vitre (précontrainte) avec la feuille de protection, une liaison de bord et un plan de capture, avec lequel la feuille de protection assemblée à celui-ci et ainsi les éclats de vitre qui y adhèrent sont dans tous les cas retenus de façon sûre sur une structure de cadre ou une infrastructure. En même temps, l'élément de maintien forme une fixation plate supplémentaire et un plan de capture contre la chute d'éclats de verre au bord de la feuille de protection, surtout lorsque la vitre feuilletée est montée dans une région de toit ou de plafond.

En même temps, l'élément de maintien forme une base solide et fiable pour des éléments de fixation, qui doivent être posés sur la vitre feuilletée elle-même. Grâce à sa faible épaisseur, il sort peu ou même pas du tout, de sorte que la feuille de protection est pratiquement parallèle à la surface de la vitre même dans la région de son bord. D'autres mesures permettent aussi de réduire la vision de l'élément de maintien à travers la feuille et/ou la vitre. Au total, des défauts optiques (dans les images réfléchies et en transparence) dus à l'élément de maintien intégré sont largement évités ou évitables.

Bien entendu, l'élément de maintien peut se composer d'une pluralité d'éléments, qui peuvent être juxtaposés ou disposés à des distances définies l'un de l'autre. Il doit dans tous les cas être fabriqué en une matière, qui permet un assemblage mécanique intime avec la matière de la couche adhésive et/ou d'autres matières adhésives et en particulier avec un ou plusieurs éléments de fixation à prévoir au bord de la vitre feuilletée. Ceci peut être par exemple un tissu ou un tricot.

Pour introduite l'élément de maintien sous la région de bord de la feuille de protection, on peut prévoir dans la couche adhésive des découpes correspondantes, qui sont remplies de colle pendant la fabrication du composite entre la feuille de protection et la vitre. Si l'élément de maintien est cependant suffisamment plat et présente un pouvoir d'absorption suffisant, on peut aussi travailler sans de telles découpes de la couche adhésive, et ainsi noyer pratiquement l'élément de maintien dans la couche adhésive présente.

Comme éléments de fixation, on propose de préférence, mais pas exclusivement, des profilés continus en matière synthétique, qui peuvent être directement formés (par projection ou extrusion) ou collés (pour des tronçons de profilés préfabriqués) sur le bord de la vitre feuilletée. Bien entendu, des éléments de fixation posés mécaniquement par serrage peuvent aussi profiter de l'élément de maintien.

Lorsque la feuille de protection sert en même temps de support fonctionnel pour des revêtements ou des éléments fonctionnels du type mentionné plus haut, la vitre feuilletée doit naturellement être également équipée de raccords électriques extérieurs pour des éléments fonctionnels à commande ou commutation électrique, afin que ces derniers puissent être raccordés à une source de courant ou à un dispositif de commutation ou de commande.

Cette forme de réalisation permet d'offrir une alternative aux vitres feuilletées également connues composées de deux vitres rigides et d'une couche adhésive, et qui atteint au moins leur sécurité à la rupture.

D'autres détails et avantages de l'objet de l'invention apparaîtront par les dessins d'un exemple de réalisation et leur description détaillée qui suit.

Dans ces dessins simplifiés sans échelle particulière,
- La Fig. 1: est une vue partielle schématique en perspective d'une vitre feuilletée selon l'invention;
- La Fig. 2: est une vue en plan d'une région de bord de la vitre feuilletée de la Fig. 1;
- La Fig. 3: est une autre vue en plan correspondant à la Fig. 2 après une autre étape du procédé;
- La Fig. 4: est une vue en coupe d'une première variante de réalisation de la vitre feuilletée;
- La Fig. 5: est une vue en coupe d'une deuxième variante de réalisation;
- La Fig. 6: est une vue en coupe d'une troisième variante de réalisation;
- La Fig. 7: est une vue en coupe d'une quatrième variante de réalisation.

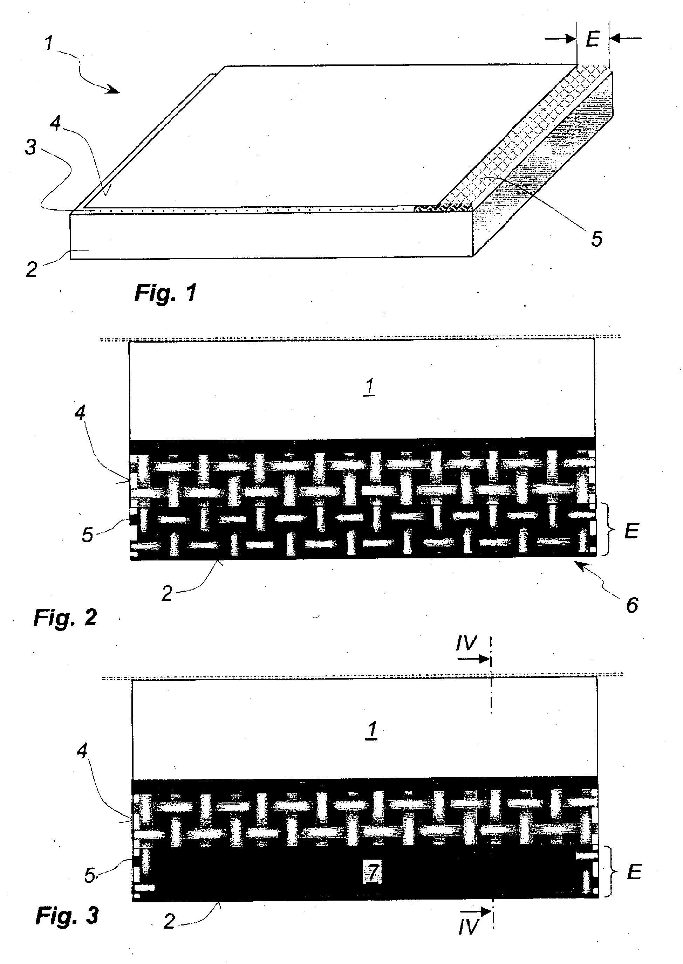

Selon la **Fig. 1****,** une vitre feuilletée 1 montrée ici de façon fragmentaire en perspective comprend une vitre rigide 2, sur laquelle adhère en surface une couche adhésive 3. Une feuille de protection 4 est également appliquée de façon adhérente en surface sur la vitre 2 à l'aide de cette dernière, de sorte que la feuille de protection 4 forme une face extérieure de la vitre feuilletée 1.

Il convient de remarquer que la vitre feuilletée 1 est certes illustrée et décrite ici comme un produit plat, mais que des vitres de forme cylindrique ou légèrement sphérique peuvent être équipées et réalisées de la même façon. Dans toutes les figures, on n'a représenté que des fragments de la vitre feuilletée 1 parce que, dans le cadre de la présente invention, seules leurs régions de bord sont concernées par les mesures proposées par l'invention.

Les parties de bord montrées sont certes représentatives du périmètre extérieur complet de la vitre feuilletée. Ceci n'exclut cependant pas qu'il puisse y avoir des parties de la région de bord configurées d'une autre façon que les parties montrées, sans quitter pour autant le cadre de l'invention.

La feuille de protection 4 et la couche adhésive 3 peuvent être confectionnées en un préstratifié, par exemple sous la forme du produit DuPont déjà mentionné.. Il peut en l'occurrence s'agir d'une feuille de PET ou de PVC (TEDLAR) de quelques dixièmes de millimètre d'épaisseur et d'une feuille de PVB d'une épaisseur choisie parmi les épaisseurs usuelles de 0,38 à 0,76 mm. Bien entendu, on peut également utiliser d'autres couches adhésives suffisamment transparentes (par exemple en polyuréthane ou en acétate d'éthylène-vinyle EVA) et d'autres feuilles de protection et/ou de fonction résistant à la déchirure.

Lorsque la vitre 2 se compose de verre précontraint, qui éclate en une multitude de fragments à bords émoussés lors d'une rupture de la zone de contraintes de compression, la feuille de protection avec la feuille adhésive retient encore ces fragments eh cas de rupture. Il importe cependant décidément, pour l'intégrité de la surface d'une telle vitre utilisable comme vitre de fenêtre ou comme vitre de toit, qu'au moins la feuille de protection et/ou la feuille fonctionnelle elle-même soit maintenue avec une grande résistance sur une structure de cadre, une bride de montage ou analogue. Tel est le point particulièrement visé par l'invention.

Sur le bord extérieur de la vitre feuilletée 1 visible à droite dans la Fig. 1, la feuille de protection 4 laisse libre une bande marginale E. A cet effet, elle peut être, lors de la coupe, coupée plus courte que la face de la vitre 2, coupée en retrait après l'application par rapport au bord extérieur ou écartée d'une autre manière. En règle générale, la bande marginale E s'étendra sur tout le périmètre extérieur de la vitre feuilletée 1. Il est cependant également possible de ne laisser de telles bandes marginales libres que sur des parties déterminées, par exemple dans les coins de la vitre et/ou en des endroits déterminés des arêtes latérales.

Dans la région de la bande marginale E, les vitres de véhicules sont en général couvertes d'une couche colorée opaque (la plupart du temps imprimée et cuite, également dite zone imprimée noire), qui n'est pas montrée ici (voir cependant la Fig. 2 et svv.). La largeur de ce dépôt coloré peut varier fortement en fonction de l'endroit de montage ultérieur; ceci est également valable en principe pour la largeur de la bande marginale E elle-même, respectivement la découpe en retrait correspondante ou le retrait de l'arête de la feuille de protection 4 par rapport à l'arête extérieure de la vitre.

La bande marginale E est recouverte par une bande 5, servant d'élément de maintien, en une matière tissée, par exemple un tapis de fibres de verre, des fibres à haute performance, etc. La même bande 5 s'étend aussi sur une certaine distance (quelques millimètres à quelques centimètres) en sandwich sous la feuille de protection 4, de telle façon qu'une zone de recouvrement soit formée parallèlement à la bande marginale entre la feuille de protection 4 et la bande 5. Bien que la feuille de protection 4 soit par nature optiquement transparente, on ne voit pas ou alors peu l'élément de maintien ou la bande 5 dans la zone de recouvrement.

La bande 5 forme donc un élément de renforcement et de maintien partiellement recouvert par la feuille de protection 4, qui est assemblé par un procédé de traitement approprié de manière adhésive et intime à la vitre 2, à la couche adhésive 3 et à la feuille de protection 4. Au total, on obtient un assemblage mécanique résistant entre la bande 5 d'une part et la vitre 1 ainsi que la feuille de protection 4 d'autre part. De préférence, la bande 5 aura une structure réticulée, avec des espaces libres qui sont suffisamment grands pour garantir une pénétration intime de colles liquides ou visqueuses dans la bande.

La dénomination "bande" n'exclut cependant pas d'autres possibilités de former de tels éléments de maintien plats réalisés conformément à l'invention et intégrés dans la vitre feuilletée. Il peut par exemple être également prévu des tronçons discrets, qui sont disposés directement l'un à côté de l'autre ou à des distances prédéterminées l'un de l'autre le long du bord de la vitre feuilletée 1. Lorsque l'on parle plus loin uniquement de bande, ceci n'exclut en aucune façon ces options interchangeables. L'essentiel est en l'occurrence que la matière de la bande ou de tout élément de maintien puisse former un assemblage collé à haute résistance avec la couche adhésive 3 et avec la surface de la vitre ou avec la face inférieure de la feuille de protection 4, respectivement qu'elle puisse être fixée sûrement à celles-ci par des colles. Il serait par exemple également possible d'introduire ici des bandes perforées en une matière solide ou de les poser en partie sous la feuille de protection.

La fixation de la bande 5 elle-même peut être effectuée de plusieurs manières différentes. On peut par exemple revêtir la bande avec une colle supplémentaire et la fixer provisoirement sur la vitre avant la pose de la couche adhésive 3 avec la feuille de protection 4 contre les éclats 2. Cette solution est recommandée en particulier lorsque la bande elle-même n'est pas très épaisse ou peut être pressée à plat.

Alternativement, une fixation thermique du tissu à base de PVB ou aussi une fixation sur base de solvants est également possible. On peut en outre obtenir, pendant la fusion de la couche adhésive thermoplastique 3, avec des moyens appropriés (par exemple en appliquant une dépression adéquate) que celle-ci enrobe uniformément la bande et se lie solidement à celle-ci, en continuité de force et de forme, après sa solidification.

La bande marginale E est utilisée dans tous les cas pour pouvoir assembler des moyens de fixation de façon fiable à la surface de la vitre, indépendamment de la feuille de protection 4 et de son revêtement de protection contre les rayures - non visible dans le dessin. Par la coupe en retrait de la feuille de protection contre les éclats 4 dans cette région de bord, on évite que le revêtement antirayures de la feuille de protection contre les éclats 4 dégrade l'adhérence de colles de montage, de profilés de bord ou analogues.

La vitre feuilletée 1 est assemblée au cadre d'une ouverture de fenêtre à l'aide des moyens de fixation. La bande 5 sert en l'occurrence de base pour la fixation par collage de ces moyens de fixation (profilés continus ou tronçons de profilés, ferrures, attaches, etc.).

Les **Fig. 2** et **3** montrent une comparaison de deux stades de la fabrication dé vitres feuilletées selon l'invention. On voit nettement dans ces vues en plan le retrait E de la feuille de protection 4 par rapport à l'arête extérieure (placée ici en bas) de la vitre 2.

La feuille de protection 4 est représentée semi-transparente dans sa région de bord extérieure, pour illustrer ainsi la disposition de la bande 5 à relativement grandes mailles et de la bande colorée opaque 6 nettement visible ici sous la feuille 4. La bande colorée 6 recouvre la bande marginale E. Sa largeur correspond de préférence à la largeur de la bande 5, de telle façon que celle-ci ne soit pas visible de l'extérieur (par l'arrière à travers la vitre 2). La bande colorée servant principalement à des fins optiques (masquage, recouvrement contre les rayons lumineux et principalement le rayonnement UV) peut en principe être disposée sur une des deux faces de la vitre 2, donc à l'intérieur ou à l'extérieur, ou sur les deux faces.

En position montée dans un véhicule, la feuille de protection est exposée vers l'intérieur de l'habitacle, la face de verre est exposée vers l'extérieur.

On voit nettement le recouvrement partiel de la bande 5 par le bord de la feuille de protection 4. La bande 5 s'étend le long de l'arête extérieure de la vitre 2. Elle peut en principe être à fleur de ladite arête, ou se trouver également en retrait par rapport à celle-ci (toutefois moins loin que la feuille de protection 4), ou aussi - selon les moyens de fixation - déborder au-delà de l'arête extérieure.

Au stade illustré dans la **Fig. 3****,** on a ajouté un tronçon d'un moyen de fixation 7 (ici sous la forme d'un profilé continu adhérant sur la surface de la vitre dans la bande marginale 3). Visiblement, ce moyen de fixation 7 recouvre la bande 5 dans la bande marginale E laissée libre par la feuille de protection 4. Il s'arrête directement à l'arête de la feuille de protection 4. Il est assemblé par collage intime aussi bien à la bande 5 elle-même qu'à la surface de la vitre 2 en pénétrant à travers la bande ou à la zone imprimée noire 6 se trouvant sur celle-ci.

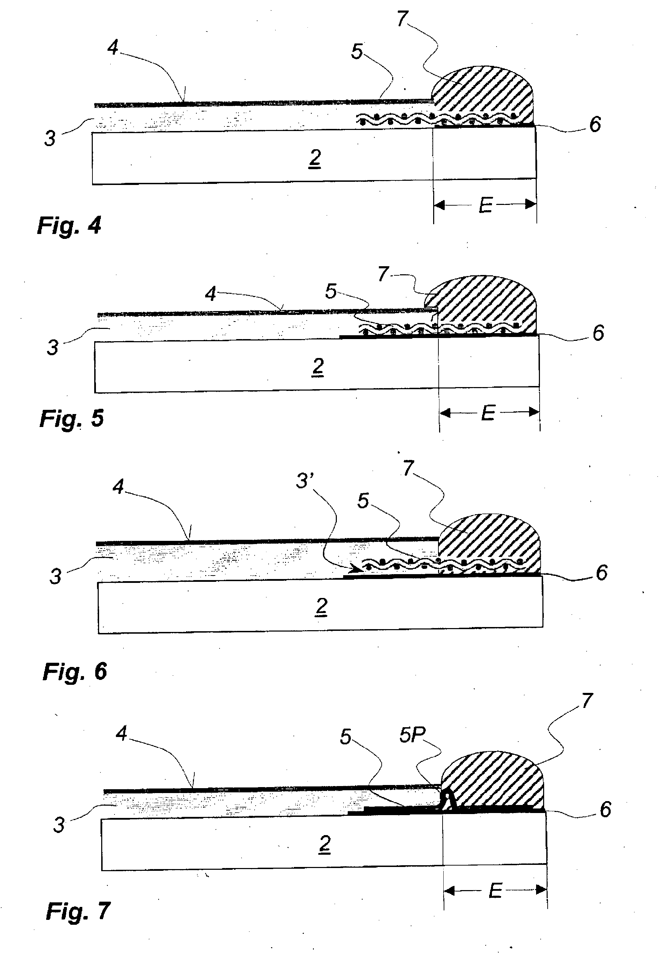

Alors que l'on peut, dans les Fig. 3 et 4, pour illustrer le recouvrement de la feuille de protection 4 et de l'élément de maintien ou de la bande 5, voir cette dernière à travers la feuille de protection 4, il est également possible de rendre la feuille de protection elle-même opaque ou en tous cas moins transparente dans cette région. Ceci peut être réalisé par exemple en opacifiant ou en colorant la matière de la feuille elle-même, ou aussi en appliquant une bande colorée opaque.

La **Fig. 4** montre une coupe transversale à travers la région de bord de la vitre feuilletée 1 le long de la ligne IV-IV de la Fig. 3. On voit encore mieux ici que le moyen de fixation 7 est intimement assemblé à la bande 5 dans la région de la bande marginale E et est aussi large que la bande marginale E elle-même. De même, on voit clairement que la feuille de protection 4 recouvre dans sa région de bord la bande 5, cette dernière étant appliquée pour l'essentiel directement sur la face supérieure de la vitre 2 ou de la bande colorée 6 (imprimée ici sur la face intérieure ou la face de feuille de la vitre feuilletée).

La bande colorée 6 cache cette région à la vue à travers la vitre 2. Elle est légèrement plus grande que la bande 5. Elle protège en outre la région de collage du moyen de fixation 7 contre le rayonnement UV, qui par expérience peut conduire à la fragilisation et au décollement de la matière synthétique.

Dans une variante montrée dans la **Fig. 5****,** le moyen de fixation 7 recouvre également, dans une configuration pour le reste inchangée par rapport à la Fig. 4, l'arête de la feuille de protection 4 dans une faible mesure (quelques millimètres), principalement pour des raisons optiques. Dans cette variante, il est donc légèrement plus large que la région marginale E proprement dite, respectivement que le retrait du bord extérieur de la feuille de protection 4 par rapport à l'arête extérieure de la vitre 2.

Il va de soi que le moyen de fixation ne doit pour sa part pas obligatoirement venir à fleur de l'arête extérieure de la vitre 2, mais qu'il peut dépasser celle-ci et éventuellement aussi être appliqué sur la face frontale de la vitre (fonction de protection d'arête et/ou de couverture de fente). Selon la conception de la structure, un tel moyen de fixation peut encore aussi recouvrir une petite partie de la face extérieure de la vitre 2, de telle façon que tout le bord de la vitre 2 soit logé dans le moyen de fixation 7.

Dans la variante montrée dans la **Fig. 6****,** la bande 5 a été, au moins dans la région du recouvrement de la feuille de protection 4, posée sur une mince couche de colle 3', qui est donc disposée entre la bande colorée 6 et la bande 5. Les deux couches de colle 3 et 3' enferment l'élément de maintien 5 entre elles dans la région de son recouvrement par la feuille de protection 4. De cette manière, on assure encore une meilleure adhérence et un meilleur assemblage entre la bande 5 et la feuille de protection 4. De même, l'adhérence de l'élément de fixation 7 peut ainsi être encore améliorée. Il faut cependant accepter une dépense de fabrication légèrement plus élevée.

On n'a pas représenté des options pour la fixation de la bande 5 sur la surface de la bande colorée 6 ou de la vitre 2 dans la région E. Ici également, on peut prévoir une fixation collée provisoire ou définitive de la bande 5 ou d'éléments de maintien analogues, si l'on ne veut pas se fier uniquement à la capacité de la matière de l'élément de fixation 7 de traverser la matière de la bande et d'adhérer à son tour directement sur la bande colorée 6 ou sur la matière du verre. En général on peut, dans toutes les formes de réalisation, garnir la bande colorée 6 ou - si celle-ci n'était pas prévue - la région marginale E de la vitre 2 d'un agent adhésif / primaire qui garantit l'adhérence à long terme entre une colle et le substrat.

Alors que, dans les figures discutées jusqu'à présent, la bande 5 est montrée et réalisée comme un composant appliqué à plat, elle est réalisée, dans la variante montrée dans la **Fig. 7****,** avec une boucle ou un pli supplémentaire 5P. Celle-ci/celui-ci se trouve à l'extérieur de la surface recouverte par la feuille de protection 4, donc dans la bande marginale E.

En cas d'endommagement de la vitre précontrainte 2, on sait que des forces de dilatation se libèrent provisoirement dans le plan de la vitre. La vitre "grandit" légèrement au-delà de son contour initial. La dilatation relative qui en résulte peut être prise en compte par construction au moyen du pli 5P, parce que celui-ci permet par nature une détente ou une déformation de la bande 5 et forme une sorte de zone d'arrêt, qui permet dans une certaine mesure une déformation de la bande également perpendiculairement au plan de la vitre. La bande 5 respectivement ses équivalents fonctionnels déjà mentionnés plus haut forment ainsi une sorte de réseau de sécurité ou de plan d'arrêt pour la vitre endommagée. Une disposition du pli 5P dans la région du joint entre le bord de la feuille de protection 4 et le bord opposé de l'élément de fixation 7 apparaît avantageuse, de sorte que le pli 5P peut se déployer en cas de rupture, sans en être empêché par la masse de colle ou par l'élément de fixation 7.

A la différence de la représentation de la Fig. 7, le pli 5P peut aussi être écrasé. A cet effet, les deux couches colorées peuvent, en dessous de l'élément de fixation 7, être appliquées sur le substrat de la partie de la bande 5 appliquée sur la vitre 2. Dans ce cas, il faut veiller à ce qu'il reste encore une base d'adhérence suffisamment large sur la partie non pliée de la bande 5 pour l'élément de fixation 7. Dans ce cas également, le pli 5P s'étirera partiellement sous une forte charge (bris de la vitre 2) et remplira ainsi sa fonction prévue de déformation et de maintien.

D'autre part :
- L'élément de retention 5 (l'élément) sert d'entretoise entre le verre 2 et la feuille anti-bris 4, afin d'empêcher ladite feuille de coller sur le verre quand la couche adhésive 3 se ramollit pendant le dégazage (mise sous vide) préliminaire du feuilleté ;
- L'élément 5 sert également de barrière contre l'extension du matériau de la couche adhésive 3 sur la surface « libre » (le long des bords, largeur « E » des Fig. 4 etc.) dudit verre 2, en « aspirant » -comme un buvard- le matériau liquide/fondu de PVB ;
- Il est important de bloquer cette surface libre contre le PVB 3 car sinon celui-ci empêcherait l'adhésion de matériau quelconque (en particulier du cadre 7) sur la surface de bord de la vitre 2 car le PET constituant le cadre 7 a une adhésion faible au PVB.
   Ces deux fonctions ne sont plus importantes dans le feuilleté fini mais seulement pendant sa fabrication.
- Dans le feuilleté fini, l'élément de retention 5 est directement relié à la couche adhésive (PVB) 3 et au cadre 7, et donc en cas de bris de la vitre 2 (verre trempé, beaucoup de débris très petits, sans stabilité) il reste une connexion stable du cadre 7 à la couche adhésive 3 à l'aide de l'élément de retention 5 qui fait effectivement le pont entre cadre 7 et PVB 3, et enfin aux débris de la vitre cassée.
- Des solutions connues fixent la feuille anti-bris au cadre mais elles ne tiennent pas compte du fait de l'adhésion assez faible du PET au PVB, et donc elles risquent de perdre l'adhésion et avec cela de perdre les débris en cas de casse du vitrage.

## Revendications

1. Vitre feuilletée (1) avec au moins une vitre rigide (2) et une couche adhésive (3) assemblée à celle-ci par collage superficiel, par laquelle une feuille de protection (4) est appliquée sur la vitre rigide (2), dans laquelle la feuille de protection (4) est en retrait par rapport à un bord extérieur de la vitre rigide au moins dans certaines parties (E), ainsi qu'avec au moins un élément de maintien (5) disposé sur le bord de la vitre rigide (2) dans la région du ou des retrait(s) de la feuille de protection (4), l'élément de maintien (5) ayant une épaisseur correspondant approximativement, mais correspondant de préférence au maximum à l'épaisseur de la couche adhésive (3) au bord de la feuille de protection et étant recouvert partiellement par la feuille de protection (4) au moins dans des parties définies, **caractérisée en ce que** la couche adhésive (3) est en retrait au moins localement par rapport au bord extérieur de la feuille de protection (4) en formant un dépassement, et **en ce que** l'élément de maintien (5) est assemblé solidement à la vitre feuilletée (1) au moins dans la région de ce dépassement libre.

2. Vitre feuilletée selon la revendication 1, **caractérisée en ce que** l'élément de maintien (5) s'étend en forme de bande autour de tout le périmètre de la vitre feuilletée (1) et est recouvert partout sur une partie de sa largeur par la feuille de protection (4).

3. Vitre feuilletée selon la revendication 1, **caractérisée en ce que** l'élément de maintien est composé de plusieurs parties initialement séparées, qui sont disposées et fixées étroitement l'une contre l'autre ou avec des distances définies dans la région marginale de la vitre feuilletée (1).

4. Vitre feuilletée selon l'une quelconque des revendications précédentes, **caractérisée en ce que** l'élément de maintien se compose d'une matière permettant une pénétration par une matière adhésive coulante ou visqueuse.

5. Vitre feuilletée selon la revendication 4, **caractérisée en ce que** l'élément de maintien (5) se compose d'une matière avec des découpes ou des passages ou avec une rugosité de surface ou d'une matière tissée ou tricotée.

6. Vitre feuilletée selon l'une quelconque des revendications précédentes, **caractérisée en ce que** l'élément de maintien (5) est saisi entre deux couches de colle (3, 3') dans la région du recouvrement par la feuille de protection (4).

7. Vitre feuilletée selon l'une quelconque des revendications précédentes, **caractérisée en ce qu'**un élément de fixation (7) est disposé sur la base d'une zone plate de l'élément de maintien (5) non recouverte par la feuille de protection et est fixé sur la vitre feuilletée (1) par assemblage avec l'élément de maintien (5).

8. Vitre feuilletée selon la revendication 7, **caractérisée en ce que** l'élément de fixation (7) est un profilé continu en matière synthétique, qui est formé ou collé directement sur le bord de la vitre feuilletée (1).

9. Vitre feuilletée selon la revendication 7 ou 8, **caractérisée en ce que** l'élément de fixation (7) recouvre le bord en retrait de la feuille de protection (4).

10. Vitre feuilletée selon l'une quelconque des revendications 7 à 9, **caractérisée en ce que** l'élément de fixation (7) s'étend sur la bande marginale (E) laissée libre par la feuille de protection et vers l'extérieur au-delà de l'arête extérieure de la vitre (2).

11. Vitre feuilletée selon l'une quelconque des revendications précédentes, **caractérisée en ce que** l'élément de maintien (5) comporte au moins une boucle ou un pli (5P) en option de dilatation.

12. Vitre feuilletée selon la revendication 11, **caractérisée en ce que** le pli (5P) est disposé dans la région située entre le bord de la feuille de protection et un élément de fixation (7) posé sur la bande marginale.

13. Vitre feuilletée selon la revendication 11, **caractérisée en ce que** le pli (5P) est disposé sous une partie de l'élément de fixation (7) posé sur la bande marginale.

14. Vitre feuilletée selon l'une quelconque des revendications précédentes, **caractérisée en ce que** l'élément de maintien (5) et un élément de fixation solidement assemblé à la vitre sur la base de celui-ci forment un cadre fermé contenant la vitre.

15. Vitre feuilletée selon l'une quelconque des revendications précédentes, **caractérisée en ce que** la vitre présente une transparence réduite dans la région de la pose de l'élément de maintien (5) pour former un masquage optique, en particulier est recouverte d'une bande colorée opaque.

16. Vitre feuilletée selon l'une quelconque des revendications précédentes, **caractérisée en ce que** la feuille de protection (4) présente une transparence réduite dans la région du recouvrement avec l'élément de maintien (5) pour former un masquage optique, en particulier est recouverte d'une bande colorée opaque.

17. Vitre feuilletée selon l'une quelconque des revendications précédentes, **caractérisée en ce que** la feuille de protection (4) forme en même temps un support ou une partie d'un support à plusieurs couches pour des couches fonctionnelles.

18. Vitre feuilletée selon la revendication 17 avec des raccords extérieurs pour le raccordement d'éléments fonctionnels électriques à une source de courant et/ou à un dispositif de commande.

## Patentansprüche

1. Verbundscheibe (1) mit mindestens einer starren Scheibe (2) und einer Klebeschicht (3), die an dieser durch oberflächliches Kleben angebaut ist, durch die eine Schutzlage (4) auf der starren Scheibe (2) angebracht ist, wobei die Schutzlage (4) in Bezug auf eine äußere Kante der starren Scheibe zumindest in bestimmten Abschnitten (E) zurückgesetzt ist, sowie mit mindestens einem Halterungselement (5), das auf der Kante der starren Scheibe (2) im Bereich des oder der Rücksetzungen der Schutzlage (4) angeordnet ist, wobei das Halterungselement (5) eine Dicke aufweist, die etwa, aber vorzugsweise höchstens der Dicke der Klebeschicht (3) an der Kante der Schutzlage entspricht, und teilweise von der Schutzlage (4) mindestens in bestimmten Abschnitten bedeckt ist, **dadurch gekennzeichnet, dass** die Klebeschicht (3) zumindest örtlich in Bezug auf die äußere Kante der Schutzlage (4) zurückgesetzt ist und einen Überstandbildet, und **dadurch gekennzeichnet, dass** das Halterungselement (5) fest an der Verbundscheibe (1) mindestens in dem Bereich des freien Überlaufs angebaut ist.

2. Verbundscheibe nach Anspruch 1, **dadurch gekennzeichnet, dass** das Halterungselement (5) sich in Form eines Streifens um den gesamten Umfang der Verbundscheibe (1) erstreckt und an einem Abschnitt seiner Breite überall von der Schutzlage (4) bedeckt ist.

3. Verbundscheibe nach Anspruch 1, **dadurch gekennzeichnet, dass** das Halterungselement aus mehreren anfänglich getrennten Abschnitten besteht, die eng aneinander oder mit bestimmten Abständen im Randbereich der Verbundscheibe (1) angeordnet und befestigt sind.

4. Verbundscheibe nach einem der vorhergehenden Ansprüche, **dadurch gekennzeichnet, dass** das Halterungselement sich aus einem Material zusammensetzt, dass eine Durchdringung durch einenflüssigen oder viskosenKlebstoff ermöglicht.

5. Verbundscheibe nach Anspruch 4, **dadurch gekennzeichnet, dass** das Halterungselement (5) sich aus einem Material mit Aussparungenoder Passagen oder mit einer Oberflächenrauigkeit oder aus einem gewebten oder gestrickten Material zusammensetzt.

6. Verbundscheibe nach einem der vorhergehenden Ansprüche, **dadurch gekennzeichnet, dass** das Halterungselement (5) im Bereich der Beschichtung durch die Schutzlage (4) zwischen zwei Klebeschichten (3, 3') gefasst ist.

7. Verbundscheibe nach einem der vorhergehenden Ansprüche, **dadurch gekennzeichnet, dass** ein Befestigungselement (7) auf der Basis einer nicht von der Schutzlage bedeckten ebenen Zone des Halterungselements (5) angeordnet ist und an der Verbundscheibe (1) durch Zusammenbauen mit dem Halterungselement (5) befestigt ist.

8. Verbundscheibe nach Anspruch 7, **dadurch gekennzeichnet, dass** das Befestigungselement (7) ein endloses Profil aus Synthetikmaterialist, das direkt auf der Kante der Verbundscheibe (1) gebildet oder angeklebt ist.

9. Verbundscheibe nach Anspruch 7 oder 8, **dadurch gekennzeichnet, dass** das Befestigungselement (7) die zurückgesetzte Kante der Schutzlage (4) bedeckt.

10. Verbundscheibe nach einem der Ansprüche 7 bis 9, **dadurch gekennzeichnet, dass** das Befestigungselement (7) sich auf dem von der Schutzlage frei gelassenen Randstreifen (E) und nach außen über die äußere Kante der Scheibe (2) hinaus erstreckt.

11. Verbundscheibe nach einem der vorhergehenden Ansprüche, **dadurch gekennzeichnet, dass** das Halterungselement (5) mindestens eine Schlaufe oder eine Falte (5P) als Ausdehnungsmöglichkeit umfasst.

12. Verbundscheibe nach Anspruch 11, **dadurch gekennzeichnet, dass** die Falte (5P) in dem Bereich angeordnet ist, der zwischen der Kante der Schutzlage und einem auf dem Randstreifenangebrachten Befestigungselement (7) liegt.

13. Verbundscheibe nach Anspruch 11, **dadurch gekennzeichnet, dass** die Falte (5P) unter einem Abschnitt des Befestigungselements (7) angeordnet ist, dasauf dem Randstreifen angebracht ist.

14. Verbundscheibe nach einem der vorhergehenden Ansprüche, **dadurch gekennzeichnet, dass** das Halterungselement (5) und ein Befestigungselement, das fest an der Scheibe auf Basis des Halterungselements angebaut ist, einen geschlossenen Rahmen bilden, der die Scheibe umfasst.

15. Verbundscheibe nach einem der vorhergehenden Ansprüche, **dadurch gekennzeichnet, dass** die Scheibe im Bereich der Anbringung des Halterungselements (5) eine verringerte Transparenz aufweist, um eine optische Verdeckung zu bilden, insbesondere von einem undurchsichtigen farbigen Streifen bedeckt ist.

16. Verbundscheibe nach einem der vorhergehenden Ansprüche, **dadurch gekennzeichnet, dass** die Schutzlage (4) im Bereich der Abdeckung mit dem Halterungselement (5) eine verringerte Transparenz aufweist, um eine optische Verdeckung zu bilden, insbesondere von einem undurchsichtigen farbigen Streifen bedeckt ist.

17. Verbundscheibe nach einem der vorhergehenden Ansprüche, **dadurch gekennzeichnet, dass** die Schutzlage (4) gleichzeitig eine Stütze oder einen Abschnitt einer Stütze aus mehreren Schichten für Funktionsschichten bildet.

18. Verbundscheibe nach Anspruch 17 mit äußeren Anschlüssstücken zum Anschließen von elektrischen Funktionselementen an eine Stromquelle und/oder an eine Steuerungsvorrichtung.

## Claims

1. Laminated glazing (1) comprising at least one rigid pane (2) and an adhesive layer (3) assembled to the latter by surface bonding, via which a protective sheet (4) is applied to the rigid pane (2), in which the protective sheet (4) is set back relative to an outer edge of the rigid pane at least in certain parts (E), and also with at least one retaining element (5) placed on the edge of the rigid pane (2) in the region of the set-back(s) of the protective sheet (4), the retaining element (5) having a thickness approximately corresponding, but preferably corresponding, to the maximum thickness of the adhesive layer (3) at the edge of the protective sheet and being partially covered by the protective sheet (4), at least in defined parts, **characterized in that** the adhesive layer (3) is set back at least locally with respect to the outer edge of the protective sheet (4), forming a projection, and **in that** the retaining element (5) is solidly assembled to the laminated glazing (1) at least in the region of this free projection.

2. Laminated glazing according to Claim 1, **characterized in that** the retaining element (5) extends in the form of a band around the entire perimeter of the laminated glazing (1) and is covered completely over part of its width by the protective sheet (4).

3. Laminated glazing according to Claim 1, **characterized in that** the retaining element is composed of several initially separate parts, which are placed and intimately fastened close together or with defined distances between them in the marginal region of the laminated glazing (1).

4. Laminated glazing according to any one of the preceding claims, **characterized in that** the retaining element is composed of a material allowing penetration by a flowing or viscous adhesive.

5. Laminated glazing according to Claim 4, **characterized in that** the retaining element (5) is composed of a material with cuts or passages or with surface roughness or of a woven or knitted material.

6. Laminated glazing according to any one of the preceding claims, **characterized in that** the retaining element (5) is gripped between two adhesive layers (3, 3') in the region of covering by the protective sheet (4).

7. Laminated glazing according to any one of the preceding claims, **characterized in that** a fastening element (7) is placed on the base of a flat zone of the retaining element (5) not covered by the protective sheet and is fastened to the laminated glazing (1) by assembly with the retaining element (5).

8. Laminated glazing according to Claim 7, **characterized in that** the fastening element (7) is a continuous plastic strip, which is formed or bonded directly to the edge of the laminated glazing (1).

9. Laminated glazing according to Claim 7 or 8, **characterized in that** the fastening element (7) covers the set-back edge of the protective sheet (4).

10. Laminated glazing according to any one of Claims 7 to 9, **characterized in that** the fastening element (7) extends over the marginal band (E) left free by the protective sheet and towards the outside beyond the outer edge of the pane (2).

11. Laminated glazing according to any one of the preceding claims, **characterized in that** the retaining element (5) includes at least one loop or fold (5P) as an expansion option.

12. Laminated glazing according to Claim 11, **characterized in that** the fold (5P) is placed in the region lying between the edge of the protective sheet and a fastening element (7) laid on the marginal band.

13. Laminated glazing according to Claim 11, **characterized in that** the fold (5P) is placed beneath a part of the fastening element (7) laid on the marginal band.

14. Laminated glazing according to any one of the preceding claims, **characterized in that** the retaining element (5) and a fastening element solidly assembled to the pane on the base of the latter form a closed frame containing the pane.

15. Laminated glazing according to any one of the preceding claims, **characterized in that** the pane has reduced transparency in the region where the retaining element (5) is placed, in order to form an optical mask, in particular is covered with an opaque coloured band.

16. Laminated glazing according to any one of the preceding claims, **characterized in that** the protective sheet (4) has reduced transparency in the region of the covering with the retaining element (5), in order to form an optical mask, in particular is covered with an opaque coloured band.

17. Laminated glazing according to any one of the preceding claims, **characterized in that** the protective sheet (4) forms at the same time a multilayer support or part of a multilayer support for functional layers.

18. Laminated glazing according to Claim 17 with external fittings for the connection of electrical functional elements to a current source and/or to a control device.
